# EUROPÄISCHE PATENTANMELDUNG

(11) **EP 3 072 643 A1**
(43) Veröffentlichungstag der Anmeldung: **28.09.2016**
(21) Anmeldenummer: 16160194.3
(22) Anmeldetag: 14.03.2016
(51) Int. Cl.: B25J 9/16

(54) **OPTO-SENSITIVE SCHÜTTGUTVEREINZELUNG**

(30) Priorität: 26.03.2015 DE 102015205495
(71) Anmelder: KUKA Systems GmbH, 86165 Augsburg (DE)
(72) Erfinder: STOCKSCHLÄDER, Julian, 86152 Augsburg (DE); ZUNKE, Richard, 86150 Augsburg (DE); HECKL, Christina, 86405 Meitingen (DE)
(74) Vertreter: Mader, Joachim

(57) **Zusammenfassung**

Die vorliegende Erfindung betrifft ein Robotersystem zum Handhaben eines Werkstücks, wobei die dreidimensionale Position des Werkstücks durch drei unabhängige Koordinaten gegeben ist. Das Robotersystem umfasst dabei ein Kamerasystem als auch einen mehrachsigen Gelenkarmroboter, wobei zumindest ein Gelenk mit zumindest einem Sensor zur Erfassung der an dem zumindest einem Gelenk wirkenden Kräfte und/oder Drehmomente versehen ist.

## Beschreibung

### 1. Technisches Gebiet

Die vorliegende Erfindung betrifft ein Robotersystem zum Handhaben eines Werkstücks und ein Verfahren zur Positionsbestimmung und zum Handhaben eines Werkstücks.

### 2. Technischer Hintergrund

Kleinteile, wie beispielsweise Schrauben oder Bolzen, werden typischerweise in Form von ungeordnetem Schüttgut transportiert. Vor einer weiteren Verwendung der Kleinteile müssen diese aus dem Schüttgut vereinzelt werden. Hierzu können zum Beispiel Vibrations-Vereinzeler oder Stufenförderer verwendet werden.

Es ist vorteilhaft, Roboter für die Vereinzelung einzusetzen, da diese eine erhöhte Flexibilität im Vergleich zu starren Zuführsystemen aufweisen. Roboter, und insbesondere Industrieroboter, sind frei programmierbare Maschinen, die sowohl stationär als auch beweglich einsetzbar sind. Mit einem betriebsintern bekannten Verfahren wird zur Stückgutvereinzelung ein Industrieroboter zusammen mit einer Kamera eingesetzt, welche die räumliche (dreidimensionale) Position der einzelnen Kleinteile erkennt. Im Anschluss greift der Industrieroboter das Kleinteil und legt es zur weiteren Verwendung ab. Dieses Verfahren erweist sich als kostenintensiv, da es u.a. eine aufwendige 3D-Bildverarbeitung erfordert. Ferner ist es notwendig, dass das Kleinteil vor einer weiteren Verwendung in einem folgenden Schritt ausgerichtet wird. Zudem ist das oben beschriebene Verfahren nicht für eine sichere Mensch-Roboter-Kollaboration (MRK) geeignet.

Es ist somit eine Aufgabe der vorliegenden Erfindung, eine MRK-fähige Schüttgutvereinzelung bereitzustellen. Es ist eine weitere Aufgabe, ein wirtschaftliches und kostengünstigeres System zur Schüttgutvereinzelung bereitzustellen. Der vorliegenden Erfindung liegt ferner die Aufgabe zugrunde, ein System und ein Verfahren zum Handhaben und Ausrichten von Schüttgut bereitzustellen.

Diese und weitere Aufgaben werden durch das Robotersystem gemäß Anspruch 1 gelöst.

### 3. Inhalt der Erfindung

Ein erfindungsgemäßes Robotersystem eignet sich zum Handhaben eines Werkstücks, wobei die dreidimensionale Position des Werkstücks durch drei unabhängige Koordinaten gegeben ist. Dabei wird die Position in jeder der drei Dimensionen durch jeweils eine der drei Koordinaten ausgedrückt. Somit lässt sich die räumliche Position des Werkstücks in einem Koordinatensystem ausdrücken, welches durch eine Basis mit drei linear unabhängigen Basisvektoren gegeben ist. Vorzugsweise werden die Koordinaten in einem orthogonalen Koordinatensystem, und weiter vorzugsweise in einem kartesischen Koordinatensystem beschrieben.

Das erfindungsgemäße Robotersystem weist dabei ein Kamerasystem zum Erfassen der ersten und zweiten Koordinate auf, wobei diese Koordinaten die Position des Werkstücks in einer ersten und zweiten Dimension beschreiben. Die erste und zweite Dimension spannen dabei eine zweidimensionale Ebene auf. Vorzugsweise umfasst das Kamerasystem eine 2D Kamera. Durch Analyse der aufgenommenen Bilder kann die Position und vorzugsweise auch die Orientierung der fotografierten bzw. aufgenommenen Objekte in zwei Dimensionen ortsaufgelöst ermittelt werden.

Das Robotersystem weist ferner einen mehrachsigen Gelenkarmroboter auf, wobei zumindest ein Gelenk mit zumindest einem Sensor zur Erfassung der an dem zumindest einem Gelenk wirkenden Kräfte und/oder Drehmomente versehen ist. Jedem Gelenk des Gelenkarmroboters lässt sich dabei eine Gelenkachse bzw. Achse zuordnen, sodass die Sensoren ebenfalls zur Erfassung der an den Achsen wirkenden Kräfte und/oder Drehmomente dienen. Dabei ist der zumindest eine Sensor vorzugsweise ein Kraft- und Momentsensor, der in zumindest dem einen Gelenk des Gelenkarmroboters integriert ist. Weiter vorzugsweise weisen alle Gelenke des Gelenkarmroboters Kraft- und/oder Momentsensoren auf, die zur Erfassung der an den Gelenken des Gelenkarmroboters wirkenden Kräfte und/oder Drehmomente vorgesehen sind. Ferner vorzugsweise weist der Gelenkarmroboter einen Endeffektor auf, der zum Handhaben des Werkstücks ausgebildet ist. Beispielsweise kann der Endeffektor in Form eines Greifers, Sauggreifers, Magnetgreifers oder Zangengreifers vorliegen.

Das erfindungsgemäße Robotersystem ist dabei eingerichtet, während einer Verlagerung des Gelenkarmroboters mit einer Verlagerungskomponente entlang einer dritten Dimension, durch Überwachung des zumindest einen Sensors die dritte Koordinate des Werkstücks zu ermitteln. Dabei verlagert sich der Gelenkarmroboter, bzw. der Endeffektor des Gelenkarmroboters, entlang einer Verlagerungsrichtung mit einer Verlagerungskomponente entlang der dritten Dimension, die orthogonal zu der ersten und zweiten Dimension ist. Die dritte Koordinate beschreibt die Position des Werkstücks entlang der dritten Dimension, welche nicht durch das Kamerasystem erfasst wurde. Dabei kann vorzugsweise durch Überwachung der wirkenden Kräfte und/oder Drehmomente entlang der Verlagerungsrichtung, also parallel zum Verlagerungsvektor, die dritte Koordinate des Werkstücks ermittelt werden. Vorzugsweise verändert sich die Position des Endeffektors des Gelenkarmroboters ausschließlich entlang der dritten Dimension.

Somit erlaubt es das erfindungsgemäße Robotersystem, auf effiziente und präzise Weise Werkstücke zu erkennen und die räumliche Position des Werkstücks zu erfassen. Dies wiederum erlaubt ein Handhaben bzw. Greifen des Werkstücks. Die Verwendung einer Kamera zur Bestimmung einer zweidimensionalen Position des Werkstücks ist präzise und mit geringem Aufwand verbunden. Ferner kann durch Überwachung der wirkenden Kräfte und/oder Drehmomente die dreidimensionale Position des Werkstücks erfasst werden, ohne dass aufwendige 3D-Analysen von aufgenommenen Bildern durchzuführen sind.

Vorzugsweise ist ein Endeffektor des Gelenkarmroboters des erfindungsgemäßen Robotersystems frei von Sensoren zur Positionsbestimmung. Somit weist der Endeffektor insbesondere keine aktiven Elemente zur Positionsbestimmung, wie beispielsweise einen radarbasierten Abstandsmesser, auf. Es ist somit möglich, ohne aufwendige Module zur Positionsbestimmung des Endeffektors das Werkstück zu erfassen.

Vorzugsweise weist der Gelenkarmroboter mindestens vier, vorzugsweise mindestens fünf, und weiter bevorzugt mindestens sechs Gelenke bzw. Achsen auf. Somit ist es vorteilhaft möglich, ein Werkstück zu greifen und in einer gewünschten Orientierung abzulegen bzw. weiterzureichen. Ferner vorzugsweise weist der Gelenkarmroboter eine redundante Achse auf, sodass durch die daraus resultierende erhöhte Flexibilität des Gelenkarmroboters eine präzise Weiterverarbeitung des Werkstücks ermöglicht wird.

Ein erfindungsgemäßes Verfahren eignet sich zur Positionsbestimmung eines Werkstücks mittels eines mehrachsigen Gelenkarmroboters, dessen Gelenke Kraft- und Momentsensoren aufweisen. Der Gelenkarmroboter weist dabei ferner einen Endeffektor zum Handhaben des Werkstücks auf, wobei die dreidimensionale Position des Werkstücks und des Endeffektors jeweils durch drei unabhängige Koordinaten gegeben ist.

Das erfindungsgemäße Verfahren weist dabei folgende Verfahrensschritte auf:
Erfassen der ersten und zweiten Koordinate des Werkstücks mittels eines Kamerasystems, wobei die erste und zweite Koordinate des Werkstücks die Position des Werkstücks in einer ersten und zweiten Dimension beschreiben. Somit wird eine zweidimensionale Position des Werkstücks erkannt.

In einem weiteren Schritt wird der Endeffektor in einer initialen Position positioniert, so dass die erste und zweite Koordinate des Endeffektors der erfassten ersten und zweiten Koordinate des Werkstücks entspricht. Die dritte Koordinate des Endeffektors entspricht dabei einem vordefinierten Wert, so dass der Endeffektor und das Werkstück einen räumlichen Abstand aufweisen. Der Fachmann versteht, dass dieser vordefinierte Wert abhängig von den Werkstücken und der Umgebung derart einzustellen ist, dass Kollisionen vermieden werden. Folglich befindet sich der Endeffektor in der initialen Position um ein Offset bzw. eine Distanz entlang der dritten Dimension von dem Werkstück versetzt.

In einem folgenden Schritt wird nach dem Positionieren der Endeffektor verlagert. Dabei wird der Endeffektor entlang einer Verlagerungsrichtung mit einer Verlagerungskomponente in einer dritten Dimension verlagert. Vorzugsweise verändert sich die zuvor eingestellte erste und zweite Koordinate des Endeffektors nicht, sondern lediglich die dritte Koordinate, welche die Position des Endeffektors in der dritten Dimension beschreibt.

In einem weiteren Schritt werden die Kraft- und Momentsensoren überwacht. Somit werden die mittels den Kraft- und Momentsensoren erfassten Kräfte und Drehmomente überwacht, die auf den Gelenkarmroboter bzw. auf die Gelenke des Gelenkarmroboters wirken.

In einem weiteren Schritt wird während des Verlagerns bestimmt, ob die Kräfte und Drehmomente entlang der Verlagerungsrichtung einen vordefinierten Grenzwert überschreiten. Es wird dabei hauptsächlich überprüft bzw. bestimmt, ob der Verlagerung eine Kraft entgegenwirkt, die einen vordefinierten Wert übersteigt. Der Fachmann versteht, dass der vordefinierte Grenzwert abhängig vom Werkstück zu wählen ist, um eine Beschädigung des Werkstücks und des Gelenkarmroboters zu vermeiden. So kann durch das Bestimmen beispielsweise festgestellt werden, dass der Endeffektor des Gelenkarmroboters direkt auf das Werkstück drückt, oder entlang des Werkstücks abrutscht.

In einem folgenden Schritt wird in Reaktion auf das Bestimmen das Verlagern beendet. Der Gelenkarmroboter bzw. Endeffektor hat vorteilhaft das Werkstück erreicht. Vorzugsweise kann das Werkstück nun durch den Endeffektor gegriffen werden.

Vorzugsweise weist das Verfahren ferner folgenden Verfahrensschritt auf: Bestimmen der dritten Koordinate des Werkstücks basierend auf der Position des Endeffektors beim Beenden des Verlagerns. Dabei wird die Position des Endeffektors der Position des Werkstücks zugeordnet, wobei vorzugsweise die Dimension und Form des Endeffektors bei der Positionsbestimmung des Werkstücks berücksichtigt wird.

Vorzugsweise weist das Verfahren weiter folgende Verfahrensschritte auf: Feststellen, während des Verlagerns, ob die Kräfte und Momente, die nicht entlang der Verlagerungsrichtung wirken, einen vordefinierten Grenzwert überschreiten, und in Reaktion auf das Feststellen: Unterbrechen des Verlagerns. Somit werden beispielsweise Kräfte ausgewertet, die normal zur Verlagerungsrichtung auf den Gelenkarmroboter wirken, die beispielsweise aus einer Kollision des Roboters mit einem Menschen resultieren. Ein Unterbrechen des Verlagerns in Folge solcher Kollisionen erlaubt eine sichere MRK.

Die vorliegende Erfindung betrifft ferner ein Robotersystem, welches mit einer Steuerung zur Durchführung eines erfindungsgemäßen Verfahrens versehen ist.

### 4. AusfÜhrungsbeispiel(e)

Im Folgenden werden mit Verweis auf die Figuren Ausführungsbeispiele der Erfindung beschrieben. Dabei zeigt:
Fig. 1 ein erfindungsgemäßes Robotersystem, und
Fig. 2 den schematischen Ablauf eines erfindungsgemäßen Verfahrens.

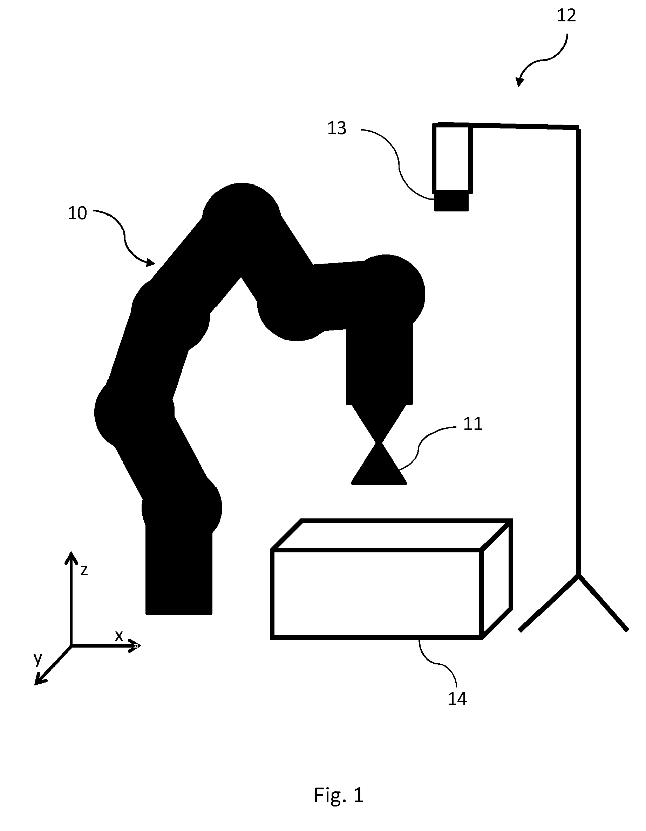

Die Fig. 1 zeigt ein Robotersystem, welches einen Manipulator bzw. Roboter 10 als auch ein Kamerasystem 12 umfasst. Der Roboter 10 ist als mehrachsiger Gelenkarmroboter 10 ausgebildet. Bei dem beispielhaft dargestellten Roboter 10 handelt es sich um einen Leichtbauroboter, welcher in sieben Achsen beweglich ist. Der Roboter 10 weist in seinen Gelenken Sensoren auf, welche die an den Gelenken bzw. Achsen wirkenden Kräfte und Drehmomente erfassen. Ferner weist der Roboter 10 einen Endeffektor 11 aufweist, der als Greifer 11 ausgebildet ist und somit ein Handhaben von Objekten ermöglicht.

Das Kamerasystem 12 umfasst eine 2D Kamera 13, welche zweidimensionale Bilder aufnehmen kann. Diese zweidimensionalen Bilder können entweder von dem Kamerasystem 12 oder einem anderen System, wie beispielsweise einer Robotersteuerung, ausgewertet werden, um zweidimensionale Informationen aus den aufgenommenen Bildern zu erhalten. Die 2D Kamera 13 ist so positioniert, dass sie es ermöglicht, ortsaufgelöste Bilder in der x-y-Ebene aufzunehmen. Folglich können aus den aufgenommenen Bildern die x-y-Positionen der aufgenommenen Objekte ermittelt werden.

Ferner ist in Fig. 1 eine Objektbox 14 dargestellt, in welcher sich viele Objekte oder Kleinteile befinden (nicht dargestellt). Diese Kleinteile können dabei als Schüttgut vorliegen. Die Objektbox 14 ist unterhalb der 2D Kamera 13 positioniert, sodass die 2D Kamera 13 zweidimensionale Bilder von den Kleinteilen aufnehmen kann. Durch die Auswertung der Bilder können zweidimensionale Informationen, bzw. die x-y-Koordinaten von den Kleinteilen erhalten werden.

Der dargestellte Roboter 10 ist mit dem Kamerasystem 12 verbunden (nicht gezeigt). Somit kann der Roboter 10 die von der 2D Kamera aufgenommenen Bilder zur Positionsbestimmung und Handhabung von Objekten, die sich in der Objektbox 14 befinden, nutzen.

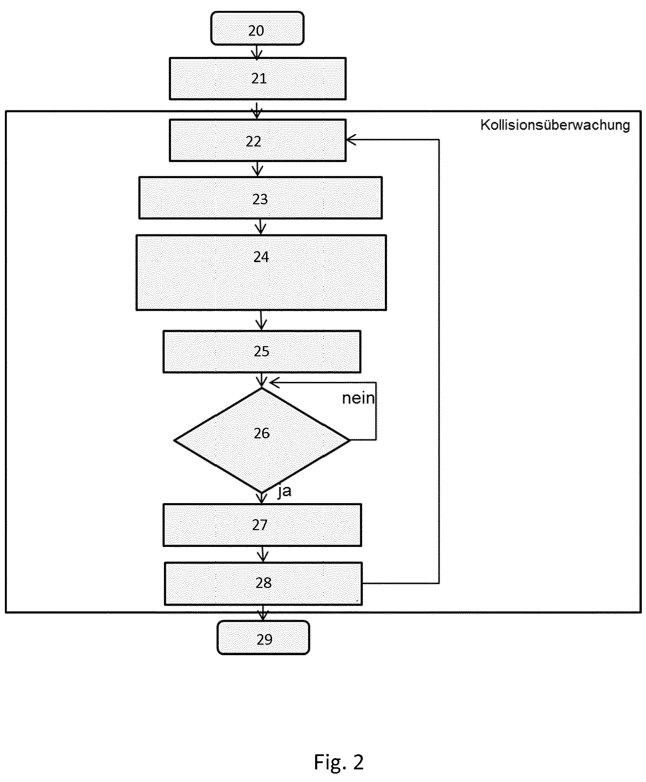

Die Fig. 2 zeigt exemplarisch den Ablauf eines Verfahrens zum Erfassen der Position eines Bauteils und anschließendem Handhaben dieses Bauteils. Das Verfahren kann beispielsweise von dem in Fig. 1 dargestellten Robotersystem durchgeführt werden und beginnt in Schritt 20. Im Schritt 21 wird der Verbindungsaufbau eingeleitet, wobei sich die Robotersteuerung oder die Systemsteuerung mit der Kamera bzw. dem Kamerasystem verbindet. Im folgenden Schritt 22 erfolgt die Bildaufnahme und Objekt-/ bzw. Bauteilerfassung. Dabei wird ein Bild durch die Kamera aufgenommen, welches anschließend ausgewertet wird. Im Zuge der Auswertung werden die Objekte bzw. Bauteile erfasst. Dies kann beispielsweise durch Abgleich der aufgenommenen Bilder mit in einer Datenbank hinterlegten Mustern der Bauteile erfolgen. Für die erfassten Bauteile wird die zugehörige zweidimensionale Lage ermittelt. Im Schritt 23 wird die ermittelte zweidimensionale Lage eines zu greifenden Bauteils, beispielsweise die entsprechenden x-y-Koordinaten, an den Roboter bzw. die Robotersteuerung übergeben.

Im Schritt 24 wird die übermittelte x-y-Position bzw. die ermittelten x-y-Koordinaten durch den Roboter angefahren, sodass der die x-y-Position des Endeffektors, bzw. die x-z-Position des Werkzeugmittelpunkts (engl.: tool center point, TCP) den erfassten x-y-Koordinaten des Bauteils entspricht. In der dritten Dimension entspricht die angefahrene z-Koordinate des Endeffektors einem vordefinierten Wert, welcher derart gewählt wurde, dass der Endeffektor ein Offset in der dritten Dimension zu dem zu greifenden Bauteil aufweist. In dieser initialen Position ist der Endeffektor somit nur in der dritten Dimension, also in z-Richtung, von dem zu greifenden Bauteil versetzt.

Im folgenden Schritt 25 verlagert sich der Roboter derart, dass sich der Endeffektor in z-Richtung dem zu greifenden Bauteil annähert. Während dieser Verlagerung werden die Kräfte erfasst, die in der Verlagerungsrichtung auf den Endeffektor und somit auf den Roboter wirken. Bei der Entscheidung 26 wird überprüft, ob diese erfassten Kräfte einem vordefinierten Grenzwert überschreiten. Der Fachmann versteht, dass dieser Grenzwert abhängig von dem zu greifenden Bauteil gewählt werden kann. Wenn die Prüfung 26 positiv ist, hat der Roboter das zu greifende Bauteil erreicht. Die z-Koordinate des Bauteils ist somit nun erreicht und bekannt. Im anschließenden Schritt 27 wird das Bauteil aufgenommen. Dies kann beispielsweise durch Greifen des Bauteils erfolgen.

Nachdem das Bauteil aufgenommen wurde, wird es in Schritt 28 weiterverwendet. So kann beispielsweise in Schritt 28 das Bauteil in eine Maschine beladen werden. Alternativ kann auch das vereinzelte Bauteil für eine spätere Verwendung abgelegt werden. Ferner kann auch im Schritt 28 das Bauteil durch den Roboter ausgerichtet werden. Durch Auswertung der aufgenommenen 2D Bilder ist die Orientierung des Bauteils bekannt, sodass der Roboter das Bauteil in eine gewünschte Orientierung bringen kann.

Das Verfahren endet in Schritt 29. Wie auch in Fig. 2 dargestellt, findet während den Schritten 22 bis 28 eine Kollisionsüberwachung statt. Im Zuge dieser Kollisionsüberwachung werden auch Kräfte und/oder Drehmomente überwacht und ausgewertet, die nicht entlang der Verlagerungsrichtung auf den Roboter wirken. Falls dabei eine Kollision des Roboters mit der Umgebung festgestellt wird, kann die Bewegung des Roboters unterbrochen werden um Schäden zu vermeiden bzw. zu reduzieren. Diese Kollisionsüberwachung erlaubt somit eine sichere MRK.

## Patentansprüche

1. Robotersystem zum Handhaben eines Werkstücks, wobei die dreidimensionale Position des Werkstücks durch drei unabhängige Koordinaten gegeben ist, aufweisend:
ein Kamerasystem zum Erfassen der ersten und zweiten Koordinate des Werkstücks, die die Position des Werkstücks in einer ersten und zweiten Dimension beschreiben, und
einen mehrachsigen Gelenkarmroboter, wobei zumindest ein Gelenk mit zumindest einem Sensor zur Erfassung der an dem zumindest einem Gelenk wirkenden Kräfte und/oder Drehmomente versehen ist,
wobei das Robotersystem eingerichtet ist, während einer Verlagerung des Gelenkarmroboters mit einer Verlagerungskomponente entlang einer dritten Dimension, durch Überwachung des zumindest einen Sensors die dritte Koordinate des Werkstücks zu ermitteln.

2. Robotersystem nach Anspruch 1, wobei ein Endeffektor des Gelenkarmroboters frei von Sensoren zur Positionsbestimmung ist.

3. Robotersystem nach einem der vorangegangenen Ansprüche, wobei das Kamerasystem eine 2D Kamera umfasst.

4. Robotersystem nach einem der vorangegangenen Ansprüche, wobei die drei unabhängigen Koordinaten kartesische Koordinaten sind.

5. Robotersystem nach einem der vorangegangenen Ansprüche, wobei der zumindest eine Sensor ein Kraft- und Momentsensor ist und in dem zumindest einem Gelenk des Gelenkarmroboters integriert ist.

6. Robotersystem nach einem der vorangegangenen Ansprüche, wobei alle Gelenke des Gelenkarmroboters Kraft- und Momentsensoren aufweisen.

7. Robotersystem nach einem der vorangegangenen Ansprüche, wobei der Roboter mindestens vier, vorzugsweise mindestens fünf, und mehr bevorzugt mindestens sechs Achsen aufweist.

8. Verfahren zur Positionsbestimmung eines Werkstücks mittels eines mehrachsigen Gelenkarmroboters, dessen Gelenke Kraft- und Momentsensoren aufweisen, wobei der Gelenkarmroboter einen Endeffektor zum Handhaben des Werkstücks aufweist, wobei die dreidimensionale Position des Werkstücks und des Endeffektors durch jeweils drei unabhängige Koordinaten gegeben ist, aufweisend folgende Verfahrensschritte:
- Erfassen der ersten und zweiten Koordinate des Werkstücks mittels eines Kamerasystems, wobei die erste und zweite Koordinate des Werkstücks die Position des Werkstücks in einer ersten und zweiten Dimension beschreiben;
- Positionieren des Endeffektors in einer initialen Position, so dass die erste und zweite Koordinate des Endeffektors der erfassten ersten und zweiten Koordinate des Werkstücks entspricht, und wobei die dritte Koordinate des Endeffektors einem vordefinierten Wert entspricht, so dass der Endeffektor und das Werkstück einen räumlichen Abstand aufweisen;
- Verlagern, nach dem Positionieren, des Endeffektors entlang einer Verlagerungsrichtung mit einer Verlagerungskomponente in einer dritten Dimension;
- Überwachen der Kraft- und Momentsensoren;
- Bestimmen, während des Verlagerns, ob die mittels der Kraft- und Momentensensoren erfaßten Kräfte und Momente entlang der Verlagerungsrichtung einen vordefinierten Grenzwert überschreiten, und
- in Reaktion auf das Bestimmen, Beenden des Verlagerns.

9. Verfahren nach Anspruch 8, weiter aufweisend:
Bestimmen der dritten Koordinate des Werkstücks basierend auf der Position des Endeffektors beim Beenden des Verlagerns.

10. Verfahren nach Anspruch 8 oder 9, weiter aufweisend folgende Verfahrensschritte:
- Feststellen, während des Verlagerns, ob die Kräfte und Momente, die nicht entlang der Verlagerungsrichtung wirken, einen vordefinierten Grenzwert überschreiten, und
- in Reaktion auf das Feststellen, Unterbrechen des Verlagerns.
